# DEMANDE DE BREVET EUROPEEN

(11) **EP 2 565 067 A1**
(43) Date de publication de la demande: **06.03.2013**
(21) Numéro de dépôt: 12305830.7
(22) Date de dépôt: 11.07.2012
(51) Int. Cl.: B60J 3/02

(54) **Pare soleil pour véhicule automobile**

(30) Priorité: 01.09.2011 FR 1157753
(71) Demandeur: Renault S.A.S., 92100 Boulogne-Billancourt (FR)
(72) Inventeur: Caffarri, Sergio Giorgio, 78290 Croissy Sur Seine (FR)

(57) **Abrégé**

L'invention concerne un pare-soleil (10) pour véhicule automobile, caractérisé en ce qu'il comprend un corps (11) comportant une partie transparente (12) à la lumière et une partie opaque (13), et en ce qu'il comprend un élément d'occultation (18) monté de manière mobile sur le corps pour varier entre une position active recouvrant au moins partiellement la partie transparente du corps et une position inactive dégagée au moins partiellement de la partie transparente du corps, caractérisé en ce que la partie opaque du corps délimite un logement prévu pour accueillir l'élément d'occultation en position inactive.

## Description

### Domaine technique de l'invention

L'invention concerne un pare-soleil, en particulier un pare-soleil destiné à être intégré dans un habitacle d'automobile à vision panoramique, notamment avec un toit en matériau transparent.

L'invention a pour objet plus particulièrement un pare-soleil pour véhicule automobile, un agencement comprenant un tel pare-soleil, et un véhicule comprenant un tel agencement.

### État de la technique

Le pare-soleil est un accessoire essentiel d'un véhicule automobile. Il est généralement constitué d'un écran opaque, mobile et orientable, fixé à la surface du plafond de l'habitacle du véhicule, en général sur une traverse au-dessus du pare-brise. Il permet de protéger les yeux du conducteur ou du passager contre les rayons du soleil.

Lorsqu'il n'est pas utilisé, le pare-soleil est replié hors du champ des vitrages, en étant rabattu contre le plafond du véhicule. Or on rencontre de plus en plus souvent des habitacles à vision panoramique, associés à la présence éventuelle d'un grand toit en verre, dans lesquels les éléments de structure (traverse supérieure) susceptibles de supporter et de loger les pare-soleils repliés voient leur taille diminuée (en largeur). De plus la traverse est souvent reculée en direction du milieu de l'habitacle pour venir se positionner presque au-dessus de la tête des occupants avant. Lorsque le toit de l'habitacle est transparent, les pare-soleils actuels dépassent de l'espace opaque formé par la traverse sur lequel ils sont fixés et débordent sur la zone du toit en verre.

Pour diminuer la partie visible sur le toit, certains pare-soleils sont réalisés en au moins deux parties, dont l'une se déploie à partir de l'autre par rotation, ou par translation (à coulisser ou dérouler) à l'image du document WO1999/65716A1. Lorsque le pare-soleil n'est pas utilisé, les deux parties sont superposées l'une sur l'autre et la largeur du pare-soleil est ainsi diminuée. Même en étant replié, la largeur du pare-soleil replié peut encore être trop large par rapport à la largeur de la traverse joignant un pare-brise panoramique avec un toit en verre. D'autre part le pare-soleil n'offre pas toujours la couverture voulue en position déployée. De plus, toutes ces solutions sont fragiles en raison de l'utilisation de nombreuses pièces en mouvements relatifs, pouvant entraîner des risques de casse en pratique, ce qui n'est évidemment pas satisfaisant.

D'autres solutions décrites dans les documents US7686374B1 et US2007/0210604A1, mettent en oeuvre un corps réalisé intégralement dans une matière transparente à la lumière, sur lequel un élément d'occultation déplaçable par exemple par coulissement permet d'occulter une partie du corps. Le corps peut être articulé sur un élément de véhicule (tableau de bord ou partie du toit de l'habitacle). Ces solutions, par leur conception, ne répondent pas aux problématiques exposées ci-dessus, notamment dans le cadre d'une application à toit panoramique. D'autre part, elles sont souvent peu pratiques d'utilisation en raison de la nécessité de déplacer sans cesse l'élément d'occultation par rapport au corps en fonction des besoins.

### Objet de l'invention

Le but de la présente invention est de proposer une solution de pare-soleil qui remédie aux inconvénients listés ci-dessus.

En particulier, un problème à résoudre est de disposer d'un pare-soleil pouvant être intégré dans un habitacle à vision panoramique, associé à la présence éventuelle d'un grand toit en verre, sans que le pare-soleil gêne la vision panoramique lorsqu'il n'est pas utilisé pour occulter la lumière.

Un premier aspect de l'invention concerne un pare-soleil pour véhicule automobile, **caractérisé en ce qu'**il comprend un corps comportant une partie transparente à la lumière et une partie opaque, et en ce qu'il comprend un élément d'occultation monté de manière mobile sur le corps pour varier entre une position active recouvrant au moins partiellement la partie transparente du corps et une position inactive dégagée au moins partiellement de la partie transparente du corps, **caractérisé en ce que** la partie opaque du corps délimite un logement prévu pour accueillir l'élément d'occultation en position inactive.

L'élément d'occultation peut être monté sur le corps de sorte à être déplacé par rotation et/ou par translation.

L'élément d'occultation peut être réalisé en matériau opaque.

Le corps peut être au moins partiellement formé en polycarbonate.

L'élément d'occultation peut comprendre des éléments d'éclairage.

La partie opaque du corps peut comprendre un revêtement opaque sur au moins l'une de ses surfaces, notamment une peinture opacifiante.

L'élément d'occultation peut être au moins partiellement formé en polyéthylène.

L'élément d'occultation peut être superposé à la partie opaque en position inactive.

Le corps peut comprendre des éléments de fixation configurés de sorte à monter à pivotement le corps sur un élément du véhicule.

La partie transparente du corps peut être disposée, par rapport à la partie opaque, du côté opposé aux éléments de fixation.

Un deuxième aspect de l'invention concerne un agencement de véhicule automobile comprenant une traverse opaque joignant une vitre du véhicule et un toit vitré. Il comprend au moins un pare-soleil fixé sur la traverse de sorte à pouvoir varier entre une position relevée dans laquelle le corps est positionné le long de la surface de toit du véhicule, et une position abaissée dans laquelle le corps est positionné le long de la surface d'une vitre du véhicule.

La fixation du corps sur la traverse est par exemple telle que le corps est monté à pivotement sur la traverse.

La fixation du corps sur la traverse peut être configurée de sorte qu'en position relevée, la partie transparente du corps est positionnée le long du toit vitré et qu'en position abaissée, la partie opaque du corps est positionnée le long de la vitre de véhicule.

La vitre de véhicule peut être constituée par le pare-brise du véhicule.

Un troisième aspect de l'invention concerne un véhicule automobile comprenant un agencement tel que mentionné ci-dessus.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en éclaté d'un exemple de pare-soleil selon l'invention,
- les figures 2 et 3 représentent le pare-soleil de la figure 1, respectivement lorsque l'élément d'occultation occupe sa position inactive et active.

### Description de modes préférentiels de l'invention

Selon un mode de réalisation, le pare-soleil 10 pour véhicule automobile, comprend un corps 11 globalement rectangulaire, avec une direction longitudinale X et une direction latérale Y. Le corps 11 est avantageusement rigide d'un seul tenant. Dans l'exemple illustré, la dimension latérale du corps 11 est supérieure à sa dimension longitudinale. Selon une caractéristique importante, le corps 11 comporte une partie transparente 12 à la lumière et une partie opaque 13 bloquant la lumière, les parties transparente et opaque 12, 13 étant décalées dans la direction longitudinale X. La partie opaque 13 est aménagée sur toute la largeur du corps comptée dans la direction latérale Y. Il en est de même pour la partie transparente 12.

Dans sa partie transparente 12, le corps 11 comprend une paroi transparente 14 bordée par deux bords latéraux 15, 16 et délimitée dans la direction longitudinale, du côté opposé à la partie opaque 13, par un bord longitudinal 17.

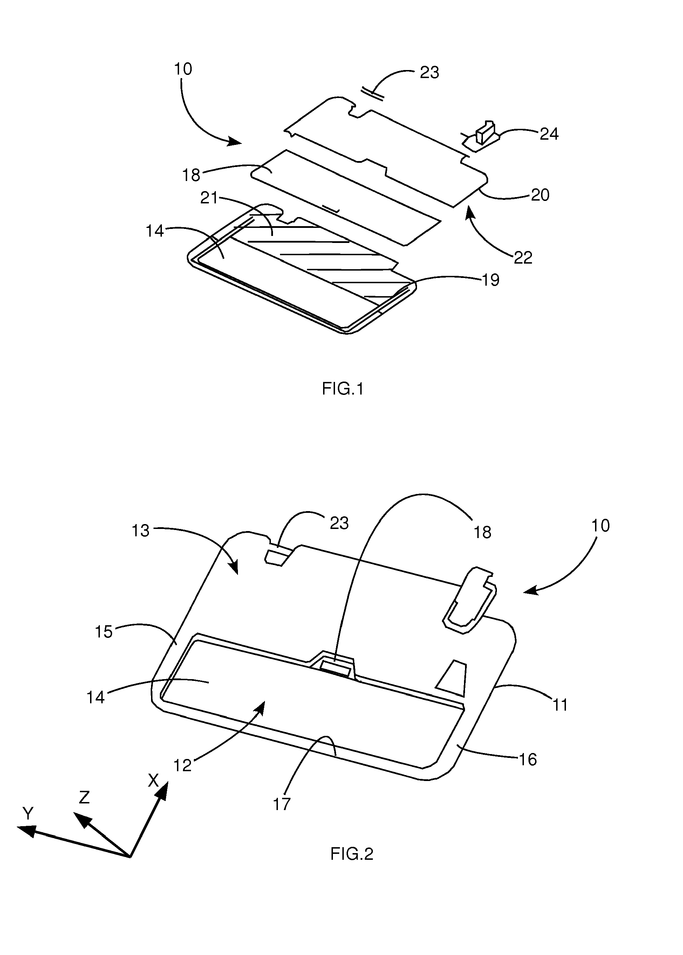

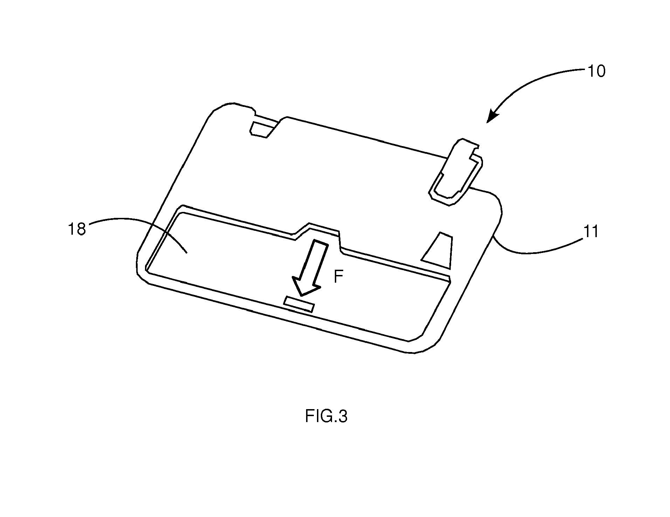

Le pare-soleil 10 comprend également un élément d'occultation 18 monté de manière mobile sur le corps 11 pour varier entre une position active (figure 3) recouvrant au moins partiellement la partie transparente 12 du corps 11 et une position inactive (figure 2) dégagée au moins partiellement de la partie transparente 12 du corps 11. L'élément d'occultation 18 est notamment rectangulaire, avec des dimensions latérale et longitudinale telles qu'il recouvre la paroi transparente 14 dans sa position active. En position inactive, l'élément d'occultation 18 est en outre prévu pour recouvrir ou superposer au moins partiellement la partie opaque 13 du corps.

De manière avantageuse, l'élément d'occultation 18 est monté sur le corps 11 de sorte à être déplacé par translation le long de celui-ci, par exemple par coulissement au moins le long des bords latéraux 15, 16. Des éléments de guidage à coulissement de l'élément d'occultation 18 sur le corps peuvent, en complément, être prévus sur la partie opaque 13. La direction de translation (flèche F de la figure 3) de l'élément d'occultation 18 par rapport au corps correspond à la direction longitudinale X. En complément ou en substitution du montage à translation, il peut être prévu que l'élément d'occultation 18 soit déplaçable par rotation, par exemple autour d'un axe de rotation parallèle à la direction latérale Y.

Comme l'illustre la figure 3, la conception de l'ensemble peut notamment être telle que l'élément d'occultation 18 puisse venir recouvrir la totalité de la partie transparente 12. Dans ce cas, par rotation et/ou translation par rapport au corps 11, l'élément d'occultation 18 peut venir occuper une position active dans laquelle il recouvre la totalité de la paroi 14, en étant adjacent aux bords latéraux 15, 16 et longitudinal 17. Il reste en outre que l'élément d'occultation 18, dans le cas d'un montage à translation sur le corps, peut adopter toute les configurations de recouvrement de la partie transparente 12 dans la position active, avec un taux de recouvrement pouvant varier entre 0% par exemple (dans le cas particulier où en position inactive, l'élément 18 est totalement dégagé de la partie transparente 12) et 100% par exemple (dans le cas particulier où en position active maximale, l'élément 18 recouvre totalement la partie transparente 12), par réglage de la position longitudinale de l'élément 18 le long du corps 11.

De manière avantageuse, l'élément d'occultation 18 est réalisé en matériau opaque. Notamment, l'élément d'occultation 18 est au moins partiellement formé en polyéthylène par exemple.

La partie opaque 13 du corps 11 délimite un logement prévu pour accueillir tout ou partie de l'élément d'occultation 18 en position inactive. Comme illustré sur la figure 1, le corps 11 peut à cet effet être formé en deux pièces fixées l'une sur l'autre de toute manière idoine (encliquetage, vissage...), chacune de ces deux pièces 19, 20 comprenant une paroi destinée à être parallèle à la paroi de l'autre pièce, en étant décalées dans une direction transversale Z perpendiculaire aux directions longitudinale et latérale, avec interposition d'un espace suffisant pour laisser coulisser l'élément d'occultation 18 dans cet espace. La pièce 19 peut notamment incorporer l'ensemble de la partie transparente 12, ainsi qu'une paroi 21 (zone hachurée sur la figure 1) aménagée au niveau de la partie opaque 13, dans le prolongement de la paroi 14 de la partie transparente 12. Les éventuels éléments de guidage en translation de l'élément d'occultation 18 au niveau de la partie opaque 13 sont aménagés au niveau des bords latéraux de la paroi 21, sur toute ou partie de leur longueur. En complément, la pièce 20 qui constitue un couvercle de fermeture selon Z de l'espace, peut être prévue pour venir se rapporter sur la pièce 19 uniquement sur toute ou partie de la partie opaque 13. Au moins l'une des deux pièces 19, 20, que ce soit au niveau de la paroi 21 de la pièce 19 ou au niveau de la paroi 22 de la pièce 20 destinée à faire face à la paroi 21, est configurée pour conférer la fonction d'opacité de la partie 13.

Il reste toutefois possible de prévoir que le corps 11 soit obtenu en une seule pièce, notamment en supprimant l'existence de la pièce 20. Notamment, l'élément d'occultation 18 peut être prévu pour venir se superposer à la partie opaque 13 en position inactive plutôt que d'être accueilli dans un logement.

Le corps 11, qu'il soit en une ou deux parties, est par exemple au moins partiellement formé en polycarbonate, ce qui rend possible de prévoir des éléments d'éclairage (par exemple par LED) au niveau de la partie opaque 13 ou de la partie transparente 12. La partie opaque 13 du corps peut comprendre un revêtement opaque sur au moins l'une de ses surfaces, notamment une peinture opacifiante déposée sur l'une des parois 21, 22.

En outre, le corps 11 comprend des éléments de fixation configurés de sorte à monter à pivotement le corps 11 sur un élément de véhicule, notamment une traverse du véhicule à proximité du toit de l'habitacle. La partie transparente 12 du corps 11 est longitudinalement disposée, par rapport à la partie opaque 13, du côté opposé aux éléments de fixation. Ces éléments de fixation peuvent notamment comprendre d'une part un organe mâle 23 destiné à coopérer par emboîtement réversible avec un organe femelle aménagé sur la traverse de véhicule, d'autre part une platine articulée 24 par rapport au corps 11 et destinée à être fixée par tout moyen à la traverse.

Ainsi, un agencement de véhicule automobile possible comprenant une traverse opaque joignant une vitre du véhicule et un toit vitré, peut comprendre au moins un pare-soleil 10 tel que décrit ci-dessus, fixé sur la traverse de sorte à pouvoir varier entre une position relevée dans laquelle le corps 11 est positionné le long de la surface de toit du véhicule, et une position abaissée dans laquelle le corps est positionné le long de la surface d'une vitre du véhicule. Notamment, et grâce à l'organe mâle 23 et à la platine articulée 24 par exemple, la fixation du corps 11 sur la traverse peut être telle que le corps est monté à pivotement sur la traverse pour passer de la position relevée à la position abaissée, ou réciproquement. Il reste toutefois envisageable que le passage d'une position à l'autre du pare-soleil puisse se faire par translation du corps relativement à la traverse, notamment dans une direction parallèle à la direction longitudinale X associée au pare-soleil.

En outre, la fixation du corps sur la traverse est avantageusement configurée de sorte qu'en position relevée, la partie transparente 12 du corps 11 est positionnée le long du toit vitré, permettant de ne pas ou peu perturber la vision panoramique à travers le toit vitré en prenant soin de placer l'élément d'occultation 18 dans sa position inactive.

D'autre part, la fixation du corps sur la traverse peut être configurée de sorte qu'en position abaissée, la partie opaque 13 du corps 11 est positionnée le long de la vitre de véhicule. Dans cette position abaissée du pare-soleil 10, l'utilisateur peut éventuellement régler la couverture de protection lumineuse obtenue grâce au pare-soleil 10 en ajustant la position longitudinale de l'élément d'occultation 18 par rapport au corps 11 depuis la position inactive.

Dans ce qui précède, la vitre de véhicule est notamment constituée par le pare-brise du véhicule, notamment dans le cadre d'un véhicule à vision panoramique mettant en oeuvre un pare-brise panoramique.

Ainsi, comme le pare-soleil 10 n'a pas besoin d'être transparent sur toute sa surface, le pare-soleil 10 selon l'invention est semi transparent avec une partie transparente 12 et une partie opaque 13 et comporte l'élément d'occultation 18 mobile. Le pare-soleil 10 présente l'avantage d'un bon guidage de l'élément d'occultation 18 grâce à la présence de la partie transparente 12 participant avantageusement au guidage, permettant une grande course de coulissement de l'élément 18, et donc une couverture de protection lumineuse très grande obtenue par le pare-soleil.

## Revendications

1. Pare-soleil (10) pour véhicule automobile, **caractérisé en ce qu'**il comprend un corps (11) comportant une partie transparente (12) à la lumière et une partie opaque (13), et **en ce qu'**il comprend un élément d'occultation (18) monté de manière mobile sur le corps pour varier entre une position active recouvrant au moins partiellement la partie transparente du corps et une position inactive dégagée au moins partiellement de la partie transparente du corps, **caractérisé en ce que** la partie opaque du corps délimite un logement prévu pour accueillir l'élément d'occultation en position inactive.

2. Pare-soleil selon la revendication 1, **caractérisé en ce que** l'élément d'occultation est monté sur le corps de sorte à être déplacé par rotation et/ou par translation.

3. Pare-soleil selon l'une des revendications 1 et 2, **caractérisé en ce que** l'élément d'occultation est réalisé en matériau opaque.

4. Pare-soleil selon l'une des revendications 1 à 3, **caractérisé en ce que** le corps est au moins partiellement formé en polycarbonate.

5. Pare-soleil selon la revendication 4, **caractérisé en ce que** le corps comprend des éléments d'éclairage.

6. Pare-soleil selon l'une des revendications 4 et 5, **caractérisé en ce que** la partie opaque du corps comprend un revêtement opaque sur au moins l'une de ses surfaces, notamment une peinture opacifiante.

7. Pare-soleil selon l'une des revendications 1 à 6, **caractérisé en ce que** l'élément d'occultation est au moins partiellement formé en polyéthylène.

8. Pare-soleil selon l'une des revendications 1 à 7, **caractérisé en ce que** l'élément d'occultation est superposé à la partie opaque en position inactive.

9. Pare-soleil selon l'une des revendications 1 à 8, **caractérisé en ce que** le corps comprend des éléments de fixation (23, 24) configurés de sorte à monter à pivotement le corps sur un élément du véhicule.

10. Pare-soleil selon la revendication 9, **caractérisé en ce que** la partie transparente du corps est disposée, par rapport à la partie opaque, du côté opposé aux éléments de fixation.

11. Agencement de véhicule automobile comprenant une traverse opaque joignant une vitre du véhicule et un toit vitré, **caractérisé en ce qu'**il comprend au moins un pare-soleil selon l'une quelconque 1 à 10 fixé sur la traverse de sorte à pouvoir varier entre une position relevée dans laquelle le corps est positionné le long de la surface de toit du véhicule, et une position abaissée dans laquelle le corps est positionné le long de la surface d'une vitre du véhicule.

12. Agencement selon la revendication 11, **caractérisé en ce que** la fixation du corps sur la traverse est telle que le corps est monté à pivotement sur la traverse.

13. Agencement selon l'une des revendications 11 et 12, **caractérisé en ce que** la fixation du corps sur la traverse est configurée de sorte qu'en position relevée, la partie transparente du corps est positionnée le long du toit vitré.

14. Agencement selon l'une des revendications 11 à 13, **caractérisé en ce que** la fixation du corps sur la traverse est configurée de sorte qu'en position abaissée, la partie opaque du corps est positionnée le long de la vitre de véhicule.

15. Agencement selon l'une des revendications 11 à 14, **caractérisé en ce que** la vitre de véhicule est constituée par le pare-brise du véhicule.

16. Véhicule automobile comprenant un agencement selon l'une des revendications 11 à 15.
